# FASCICULE DE BREVET EUROPEEN

(11) **EP 2 850 038 B1**
(45) Date de publication et mention de la délivrance du brevet: **13.03.2019**
(21) Numéro de dépôt: 13723082.7
(22) Date de dépôt: 13.05.2013
(51) Int. Cl.: C04B 28/14, C04B 40/06

(54) **MORTIER A GACHAGE SIMPLIFIE**
VEREINFACHT ZU MISCHENDER MÖRTEL
SIMPLIFIED-MIXING MORTAR

(30) Priorité: 14.05.2012 FR 1201393
(43) Date de publication de la demande: 25.03.2015
(73) Titulaire: Siniat, 84000 Avignon (FR)
(72) Inventeur: JAHAN, Mickaël, F-84915 Avignon cedex 9 (FR); ZERBIB, Stephan, F-84915 Avignon cedex 9 (FR)
(74) Mandataire: Vaeck, Elke
(86) Numéro de dépôt international: PCT/EP2013/059774
(87) Numéro de publication internationale: WO 2013/171143

(56) Documents cités:
- EP-A1- 0 113 618
- EP-A1- 0 602 999
- EP-A1- 1 785 406
- DE-U1-202007 015 262
- GB-A- 2 249 297
- US-A- 4 514 471
- US-A1- 2004 182 286
- TOUSLESPRIX: "Mortier colle carrelage SADER teinte grise - Boîte de 1,5 kg", , 15 juin 2011 (2011-06-15), XP002687138, Extrait de l'Internet: URL:http://www.touslesprix.com/achat,morti er-colle-carrelage-ext%E9rieur.html [extrait le 2012-11-14]
- Bostik: "Showerproof", , 1 juillet 2010 (2010-07-01), XP002687139, Extrait de l'Internet: URL:www.bostik.co.uk [extrait le 2012-11-14]

## Description

### DOMAINE DE L'INVENTION

La présente invention concerne un produit permettant la préparation de mortier de façon simplifiée. Ce produit comporte une poudre de liant hydraulique et un conditionnement sous forme de boîte, dans laquelle le mortier peut être directement préparé par addition d'eau.

### ARRIERE-PLAN TECHNIQUE

Les produits à base de liant hydraulique du type enduit ou colle existent sous deux formes principales : les produits sous forme de poudre, et les produits sous forme de pâte (prêts à l'emploi).

Par exemple, la demande de brevet GB 2 249 297 décrit un paquet de mortier, comprenant un récipient muni d'un mortier mouillé et prêt à être utilisé, lequel récipient étant scellé et constitué d'un matériau souple. Un exemple d'un mortier colle à carrelage prêt à gâcher est le mortier vendu sous le nom SADER®. Le brevet US 4,514,471 décrit une pâte de plâtre hydratée pour la préparation des plaques de plâtre, comprenant 28 à 60 parts d'eau pour 100 parts de plâtre.

Les produits sous forme de poudre peuvent être relativement difficiles à manier pour des utilisateurs peu expérimentés. En effet, d'une part ils nécessitent de disposer d'un récipient de gâchage et d'outils de gâchage, et d'autre part il est nécessaire de mesurer relativement précisément les quantités de poudre et d'eau qui sont mélangés, afin de respecter un rapport de poudre et d'eau déterminé, sans quoi le mortier ainsi préparé ne présente pas les propriétés souhaitées.

D'un autre côté, les produits sous forme de pâte sont plus onéreux. En outre, une partie importante du poids de ces produits correspond à de l'eau, ce qui est peu économique. Il faut également souligner que le temps de durcissement et de séchage de ces produits est généralement élevé (en raison de la nature des formulations utilisées), et que l'aspect du produit est souvent dégradé au bout d'un stockage de quelques mois. Par ailleurs, si l'utilisateur juge le produit insuffisamment épais, il lui est impossible d'ajuster la formulation de sorte à corriger ce défaut.

Il existe donc un besoin de mettre au point un produit permettant de palier les inconvénients des poudres et des pâtes, ou inversement de combiner les avantages des poudres et des pâtes. Plus particulièrement, il existe un besoin de disposer d'un produit à base de liant hydraulique de type poudre, c'est-à-dire économique, peu lourd, de bonne qualité et flexible d'utilisation, et qui soit en outre plus facile et / ou plus rapide à gâcher en particulier pour un utilisateur peu averti ou peu expérimenté.

### RESUME DE L'INVENTION

L'invention concerne en premier lieu un produit pour la préparation d'un mortier, comprenant une boîte contenant une poudre de liant hydraulique, comprenant une proportion de sulfate de calcium supérieure ou égale à 70%, la poudre de liant hydraulique présentant un taux d'humidité supérieur ou égal à 0,3 % et inférieur ou égal à 1,5%.

La boîte est étanche à l'eau, et à l'air.

Selon un mode de réalisation, la poudre de liant hydraulique présente un taux d'humidité supérieur ou égal à 0,4 %, de préférence supérieur ou égal à 0,5 % ou supérieur ou égal à 0,6 %.

Le terme « *poudre* » désigne un produit sous forme de particules discrètes, sans milieu liquide entre les particules.

Selon un mode de réalisation, la poudre de liant hydraulique comprend :
- de 75 à 80 % de sulfate de calcium ;
- de 17 à 22 % de carbonate de calcium ;
- optionnellement, des éthers de cellulose dans une proportion inférieure à 3 % ;
- optionnellement, des additifs supplémentaires dans une proportion inférieure à 2 %.

Selon un mode de réalisation, la boîte comporte au moins une indication de niveau pour l'ajout d'eau dans la boîte.

Selon un mode de réalisation, l'indication de niveau est présente sur une surface intérieure d'une paroi de la boîte et / ou est présente sur une surface extérieure d'une paroi de la boîte, la boîte étant de préférence adaptée pour permettre l'inspection de son contenu à travers la paroi.

Selon un mode de réalisation, le produit comporte des instructions relatives à l'ajout d'eau dans la boîte et au gâchage de la poudre de liant hydraulique avec de l'eau, de préférence en l'absence d'outils de mélange.

Selon un mode de réalisation, le produit est pour la préparation d'un enduit ou d'une colle.

L'invention concerne également un procédé de fabrication du produit ci-dessus, comprenant une étape de conditionnement de la poudre de liant hydraulique dans la boîte.

Selon un mode de réalisation, le procédé comprend une étape de fabrication de la poudre de liant hydraulique avant l'étape de conditionnement.

Selon un mode de réalisation, le procédé comprend une étape de maturation de la poudre de liant hydraulique, postérieurement à l'étape de fabrication de la poudre, et/ou comprend une étape de maturation d'une fraction de la poudre de liant hydraulique, au cours de la fabrication de la poudre.

Selon un mode de réalisation, l'étape de maturation est effectuée avant l'étape de conditionnement dans la boîte, et de préférence la poudre est conditionnée en sac pendant l'étape de maturation.

Selon un mode de réalisation, l'étape de maturation présente une durée supérieure ou égale à une semaine, de préférence supérieure ou égale à un mois, ou supérieure ou égale à deux mois, ou supérieure ou égale à trois mois, ou supérieure ou égale à quatre mois.

L'invention concerne également un procédé de préparation d'un mortier, comprenant l'ajout d'eau dans la boîte du produit ci-dessus, et le gâchage de la poudre avec l'eau.

Selon un mode de réalisation, l'eau est ajoutée jusqu'à l'indication de niveau de la boîte.

Selon un mode de réalisation, le gâchage est effectué en agitant la boîte, de préférence sans l'utilisation d'un outil de gâchage.

L'invention concerne également un procédé de réalisation d'un ouvrage, comprenant la préparation d'un mortier selon le procédé ci-dessus, et l'application du mortier sur une surface dans lequel l'application du mortier sur une surface consiste en :
- une application d'une couche d'enduit de finition sur une paroi ; ou
- une enduction d'une colle sur un élément de construction, le procédé comprenant en outre la mise en contact de l'élément de construction enduit de colle avec un autre élément de construction ; ou
- une opération de colmatage de cavités sur une paroi au moyen d'un enduit de rebouchage.

La présente invention permet de surmonter les inconvénients de l'état de la technique. Elle fournit plus particulièrement un produit pour la préparation d'un mortier qui est de type poudre, et qui est donc plus économique, moins lourd, de meilleure qualité (y compris dans la durée) et plus flexible d'utilisation (par ajustement de la consistance notamment) que les produits de type pâte prête à l'emploi. Par ailleurs, ce produit est plus facile et / ou plus rapide à gâcher qu'un produit de type poudre de l'état de la technique.

Cette invention est rendue possible par le fait que la poudre utilisée, lorsqu'elle présente un degré d'humidité, encore appelé ici taux d'humidité, suffisant, se prête au gâchage de façon beaucoup plus simple et plus efficace que lorsque son degré d'humidité est faible.

Sans vouloir être liés par une théorie, les présents inventeurs estiment que le taux d'humidité influence le taux d'éclatement des grains de la poudre, et donc la réactivité de celle-ci vis-à-vis de l'hydratation.

Ainsi, grâce à l'invention, il devient possible de procéder au gâchage en ajoutant l'eau dans la poudre et non l'inverse, comme cela est en principe exigé pour obtenir un résultat satisfaisant dans l'état de la technique.

De la sorte, la poudre peut être conditionnée dans une boîte permettant son gâchage directement dans la boîte, de préférence sans l'aide d'outils de gâchage. La quantité d'eau nécessaire est idéalement mesurée directement dans la boîte, au moyen d'une indication de niveau.

### DESCRIPTION DE MODES DE REALISATION DE L'INVENTION

L'invention est maintenant décrite plus en détail et de façon non limitative dans la description qui suit.

Les proportions sont données en pourcentages massiques sauf mention contraire.

La poudre de liant hydraulique utilisée dans le cadre de l'invention comprend un ou plusieurs liants hydrauliques et éventuellement des composés supplémentaires. Le sulfate de calcium est l'un des liants hydrauliques de la poudre, éventuellement le seul liant hydraulique de la poudre. Selon un autre mode de réalisation, les liants hydrauliques de la poudre comprennent (ou consistent en) du sulfate de calcium et du carbonate de calcium.

La proportion de sulfate de calcium dans la poudre est supérieure ou égale à 70 %.

Selon un mode de réalisation, la poudre comprend de 70 à 85 % de sulfate de calcium et de 10 à 30 % de carbonate de calcium.

Par exemple, la poudre peut comprendre de 75 à 80 % de sulfate de calcium et de 17 à 22 % de carbonate de calcium.

De préférence, le sulfate de calcium présent dans la poudre est essentiellement dépourvu de sulfate de calcium anhydrite III. Le sulfate de calcium présent dans la poudre est sous forme de semi-hydrate à plus de 90 %, ou plus de 95 %, ou plus de 98 %, ou plus de 99 %, ou plus de 99,9 %.

Avantageusement, la poudre comprend également des éthers de cellulose, de préférence dans une proportion inférieure à 3 %. Les éthers de cellulose ont une fonction de rétenteur d'eau avec un effet plus ou moins épaississant de la pâte.

La poudre peut également comprendre un ou plusieurs additifs, de préférence dans une proportion inférieure à 2 %. Ces additifs peuvent notamment comprendre des retardateurs de prise (tels que des acides) et / ou des épaississants.

La poudre est généralement fabriquée par simple mélange des différents composés. Le sulfate de calcium est directement issu de la calcination du gypse.

Après la fabrication de la poudre, on procède à une étape de maturation afin d'augmenter le degré d'humidité de celle-ci et ainsi d'améliorer sa capacité au gâchage. Généralement, le sulfate de calcium issu de la calcination du gypse présente un degré d'humidité de 0 % et contient une proportion de forme anhydrite III pouvant aller jusqu'à 30 %. Lors de la phase de maturation, l'eau de l'air ambiant interagit avec la poudre, convertissant dans un premier temps la forme anhydrite III en forme semi-hydrate, puis dans un second temps augmentant le degré d'humidité de la poudre.

Alternativement, l'étape de maturation peut être effectuée au cours de la fabrication de la poudre. Par exemple, on peut effectuer une maturation du sulfate de calcium (et éventuellement une maturation des autres composés) avant le mélange. On peut également par exemple effectuer un pré-mélange de la fraction sulfate de calcium et de la fraction de carbonate de calcium, et effectuer l'étape de maturation sur ce pré-mélange avant ajout des éthers de cellulose et autres additifs. On peut également par exemple diviser l'étape de maturation en deux parties, une première partie étant effectuée au cours de la fabrication de la poudre, et une deuxième partie étant effectuée après la fabrication de la poudre.

L'étape de maturation de la poudre consiste avantageusement en une simple conservation de la poudre (ou de la fraction de la poudre considérée) dans un conditionnement non hermétique à l'air (et plus particulièrement non hermétique à la vapeur d'eau), permettant ainsi le contact de la poudre avec l'air ambiant (et notamment avec la vapeur d'eau qu'il contient). Cette conservation de la poudre peut se faire à température ambiante, par exemple dans des sacs en papier ou en carton. La durée de l'étape de maturation est avantageusement supérieure ou égale à une semaine, ou à un mois, ou à deux mois, ou à trois mois, ou à quatre mois. Des résultats particulièrement bons ont été observés avec une durée de trois à quatre mois.

De préférence, l'étape de maturation présente une durée inférieure à deux ans, notamment inférieure à un an, et de préférence encore inférieure à dix mois, ou inférieure à huit mois, ou inférieure à six mois.

La durée de l'étape de maturation est réduite si la température ambiante est relativement plus élevée et si l'humidité relative de l'air est relativement plus élevée. On peut donc effectuer l'étape de maturation dans un hangar à atmosphère contrôlée pour contrôler la durée et de l'étape de maturation et notamment l'accélérer.

A l'issue de l'étape de maturation, le taux d'humidité de la poudre est supérieur ou égal à 0,3 %, de préférence supérieur ou égal à 0,4 % ou 0,5 % ou 0,6 %. Le taux d'humidité de la poudre est inférieur ou égal à 1,5% ; de préférence, le degré d'humidité est inférieur ou égal à 1 %, notamment inférieur ou égal à 0,9 %, ou à 0,8 %, voire à 0,7 %. Un degré d'humidité trop élevé entraîne des risques de reformation de gypse.

Le degré d'humidité de la poudre peut être mesuré selon le paragraphe 7 de la norme ASTM C471M (édition de 1998).

Avantageusement, à l'issue de l'étape de maturation, le taux d'éclatement des grains de la poudre, et notamment le taux d'éclatement des grains de sulfate de calcium semi-hydraté est inférieur à 15 %, ou inférieur à 10 %, et de préférence est de 0 à 5 %. Le taux d'éclatement des grains peut être mesuré comme décrit dans Eclatement des grains de plâtre au contact de l'eau, de J.C. Weiler, dans Ciments, bétons, plâtres, chaux, n°5, p.364-368 (1988) édité par Verre Presse Services, Paris, France.

La durée de l'étape de maturation peut être fixée à l'avance (si l'on connaît le profil d'évolution du degré d'humidité en fonction du temps. Alternativement, on peut mesurer le degré d'humidité de la poudre au cours de l'étape de maturation, et interrompre celle-ci lorsqu'une valeur seuil prédéterminée du degré d'humidité est atteinte.

Alternativement à une maturation en sacs, on peut effectuer l'étape de maturation directement en silo (notamment silo de sulfate de calcium ou silo de pré-mélange de sulfate de calcium et carbonate de calcium ou silo de poudre de liant hydraulique).

La poudre selon l'invention est conditionnée dans des boîtes, de préférence une fois l'étape de fabrication et l'étape de maturation terminées. Alternativement, on peut envisager d'effectuer tout ou partie de l'étape de maturation directement dans les boîtes (par exemple couvercle ouvert lorsqu'un tel couvercle est présent). Toutefois, dans une telle variante la maturation peut être plus complexe à mettre en oeuvre, et elle peut notamment nécessiter un mélange occasionnel (ou régulier) de la poudre dans les boîtes pour que le degré d'humidité ne soit pas hétérogène à l'intérieur des boîtes.

Le terme « *boîte* » désigne ici un récipient non-déformable, c'est-à-dire qui présente la même forme vide et rempli de poudre. Ce terme est utilisé par opposition aux sacs, sachets et autres emballages (notamment en papier, carton ou plastique). Les boîtes au sens de l'invention sont des éléments de conditionnement, c'est-à-dire qu'elles sont utilisées principalement à des fins de stockage et/ou de transport.

Les boîtes utilisées dans le cadre de l'invention sont de préférence hermétiques à l'eau, c'est-à-dire imperméables, et ce afin de permettre l'ajout d'eau et le gâchage directement dans les boîtes.

Les boîtes utilisées dans le cadre de l'invention peuvent comporter une ou de préférence plusieurs parois, et être fabriquées en matière plastique, ou éventuellement en métal ou en verre. De préférence elles ne sont pas fabriquées en papier ou en carton, mais il est toutefois possible d'envisager des boîtes en carton rigide pourvu d'un revêtement interne imperméable à l'eau.

Les boîtes utilisées dans le cadre de l'invention sont par exemple des récipients de forme parallélépipédique, cylindrique ou tronconique. Elles sont avantageusement munies d'un couvercle, comme mentionné ci-dessus, apte à fournir une fermeture hermétique à l'eau et à l'air.

Ces boîtes peuvent comporter des moyens de préhension, et notamment une anse, auquel cas il peut s'agir de seaux (à couvercle).

Les boîtes peuvent par exemple avoir un volume de 0,5 à 20 L, de préférence de 1 à 10 L, et notamment de 2 à 5 L.

Avantageusement, la proportion du volume de boîte occupé par la poudre est de 30 à 80 %, de préférence de 40 à 70 %, et notamment de 50 à 60 %, afin de laisser de l'espace disponible pour l'ajout d'eau de gâchage et afin de permettre le gâchage dans la boîte.

A titre d'illustration, on peut prévoir des boîtes de 3 L de volume pour 1,5 kg de poudre.

De préférence, les surfaces internes des parois des boîtes sont lisses (y compris le fond et les côtés des boîtes), afin d'éviter toute retenue de poudre.

Les boîtes utilisées dans le cadre de l'invention peuvent comporter une indication de niveau pour l'ajout d'eau dans la boîte. Il peut s'agir par exemple d'une marque sur une surface intérieure d'une paroi de la boîte. Il peut s'agir également d'une marque sur une surface extérieure d'une paroi de la boîte. Dans ce cas, la boîte est adaptée pour permettre l'inspection de son contenu au travers la paroi, c'est-à-dire que la paroi est au moins partiellement transparente ou translucide. On utilise à cette fin une paroi en matière plastique ou en verre.

De préférence, cette indication de niveau est adaptée pour permettre un gâchage à un rapport E/P de 0,45 à 0,75, de préférence de 0,5 à 0,7, et notamment de 0,55 à 0,65, lorsque la boîte contient une quantité nominale de poudre.

Dans certains modes de réalisation, on peut prévoir deux indications de niveau d'ajout d'eau (ou davantage), pour permettre un ajout d'eau selon des rapports E/P différents et ainsi la préparation de mortiers (ou pâtes) de différentes consistances, selon l'usage souhaité.

Lors de l'utilisation, l'utilisateur a la possibilité d'ajouter directement de l'eau dans la boîte (par exemple jusqu'à l'indication de niveau présente sur la boîte), et il a ainsi la possibilité de gâcher la pâte directement dans la boîte, sans utiliser d'autre récipient. Avantageusement, il peut se dispenser d'outils de gâchage manuels ou mécaniques, une simple agitation manuelle de la boîte suffisant à effectuer le gâchage et à obtenir un mortier homogène et sans grumeaux. La durée de l'agitation manuelle est avantageusement inférieure à 1 minute, de préférence inférieure à 30 secondes ou à 20 secondes. Une durée d'agitation manuelle de 10 secondes environ peut notamment suffire.

Des instructions relatives à l'ajout d'eau et à l'opération de gâchage (de préférence dans la boîte et sans outil de gâchage) peuvent être prévues en accompagnement de la boîte, ou sur la boîte elle-même, par exemple sur le couvercle ou sur le fond de la boîte ou sur le côté de la boîte (surface externe d'une paroi latérale).

Le mortier ainsi préparé est de préférence un produit de type enduit ou colle ou enduit-colle. Il est avantageusement utilisé en tant qu'enduit de finition appliqué sur une paroi, ou en tant que colle permettant de coller des éléments de construction entre eux (par exemple des carreaux sur un support), ou encore en tant qu'enduit de rebouchage, pour colmater ou combler des cavités sur une paroi.

De préférence, le mortier en question est un enduit-colle, c'est à dire un mortier adapté à l'ensemble de ces usages.

De manière générale, le mortier peut être appliqué sur toutes sortes de surfaces, par exemple des surfaces en plâtre, en ciment, en béton, en toile de verre, en brique, ou encore des surfaces enduites ou peintes.

L'utilisateur a bien sûr toujours la possibilité de procéder au gâchage de manière traditionnelle en dehors de la boîte s'il le souhaite.

### EXEMPLE

Un exemple de poudre pour mortier selon l'invention, et un exemple de poudre pour mortier « fraîche » (non-maturée) sont fournis à titre illustratif ci-dessous.

La poudre de mortier fraîche est une poudre à base de semi-hydrate de calcium, avec un taux d'humidité de 0 % et une teneur en AIII de 6%.

Le poudre de mortier selon l'invention une poudre à base de semi-hydrate de calcium, qui a subi une étape de maturation. Le taux d'humidité de la poudre est de 1,3 %. Sa teneur en AIII est de 0 %.

La teneur d'eau combinée pour les deux mortiers est de 4,3 %.

Les propriétés des deux poudres sont comparées dans le tableau ci-dessous.

| | Poudre selon l'invention | Poudre « fraîche » |
|---|---|---|
| Taille de particules en µm, avant ajout d'eau | | |
| D10 | 2,1 | 2,2 |
| D50 | 17,4 | 18,3 |
| D90 | 83,1 | 83,4 |
| Taille de particules en µm, après ajout d'eau | | |
| D10 | 2,3 | 2,7 |
| D'50 | 16,5 | 14,4 |
| D90 | 72,5 | 52,8 |
| Aptitude à l'éclatement | 5 | 21 |

La distribution de taille des particules avant ajout d'eau est déterminée en voie humide, selon la méthode de test AG-0048-LG.

La distribution de taille des particules après ajout d'eau est déterminée en voie humide, selon la méthode de test AG-0039-LG avec un rapport E/P de 300 %.

Le facteur d'aptitude à l'éclatement est défini selon la formule (D50-D'50)×100/D50.

Par ailleurs, on compare le gâchage de mortiers à partir de la poudre de l'invention, et à partir de la poudre « fraîche » non maturée (mortier « frais »), avec un facteur E/P (eau / poudre) de 65 %. Le gâchage est effectué avec un mélangeur Controllab.

Les résultats sont reportés dans le tableau ci-dessous.

| | Mortier selon l'invention | Mortier « frais » |
|---|---|---|
| Viscosité Brookfield (en 10³ cPo) | 288 | 639 |
| Viscosité Brabander (en B/U) | 270 | 490 |
| Etalement (en mm) | 162 | 155 |
| Temps de prise initial (en min) | 121 | 81 |
| Aspect visuel | Lisse - pas de grumeaux | Lisse - quelques grumeaux |

La viscosité Brookfield est mesurée pendant 1 minute jusqu'à obtention d'une valeur stable.

L'étalement est déterminé selon la méthode de test E5-0038-LG.

Le temps de prise initial est déterminé selon la méthode de test E5-0007-LG.

Par ailleurs, on a remarqué que la viscosité Brookfield ne varie quasiment pas (d'environ 50×10³ cPo) au cours du temps (sur environ 60 minutes) pour ce qui est du mortier selon l'invention, alors qu'elle fluctue plsu fortement (d'environ 400×10³ cPo) pour le mortier traditionnel.

## Revendications

1. Produit pour la préparation d'un mortier, comprenant une boîte contenant une poudre de liant hydraulique comprenant une proportion de sulfate de calcium supérieure ou égale à 70%,le sulfate de calcium présent dans la poudre étant sous forme de semi-hydrate à plus de 90%, la poudre de liant hydraulique présentant un taux d'humidité supérieur ou égal à 0,3 % et inférieur ou égal à 1,5% ; dans lequel la boîte est étanche à l'eau et à l'air.

2. Produit selon la revendication 1, dans lequel la poudre de liant hydraulique comprend du sulfate de calcium et du carbonate de calcium.

3. Produit selon l'une des revendications 1 à 2, dans lequel la poudre de liant hydraulique comprend :
- de 75 à 80 % de sulfate de calcium ;
- de 17 à 22 % de carbonate de calcium ;
- optionnellement, des éthers de cellulose dans une proportion inférieure à 3 % ;
- optionnellement, des additifs supplémentaires dans une proportion inférieure à 2 %.

4. Produit selon l'une des revendications 1 à 3, dans lequel la boîte comporte au moins une indication de niveau pour l'ajout d'eau dans la boîte, l'indication de niveau est présente sur une surface intérieure d'une paroi de la boîte et / ou est présente sur une surface extérieure d'une paroi de la boîte, la boîte étant de préférence adaptée pour permettre l'inspection de son contenu à travers la paroi.

5. Procédé de fabrication du produit selon l'une des revendications 1 à 4, comprenant une étape de conditionnement de la poudre de liant hydraulique dans la boîte.

6. Procédé selon la revendication 5, comprenant une étape de fabrication de la poudre de liant hydraulique avant l'étape de conditionnement.

7. Procédé selon la revendication 5 ou 6, comprenant une étape de maturation de la poudre de liant hydraulique, postérieurement à l'étape de fabrication de la poudre, et/ou comprenant une étape de maturation d'une fraction de la poudre de liant hydraulique, au cours de la fabrication de la poudre.

8. Procédé selon la revendication 9, dans lequel l'étape de maturation est effectuée avant l'étape de conditionnement dans la boîte, et dans lequel de préférence la poudre est conditionnée en sac pendant l'étape de maturation.

9. Procédé selon la revendication 7 ou 8, dans lequel l'étape de maturation présente une durée supérieure ou égale à une semaine, de préférence supérieure ou égale à un mois, ou supérieure ou égale à deux mois, ou supérieure ou égale à trois mois, ou supérieure ou égale à quatre mois.

10. Procédé de préparation d'un mortier, comprenant l'ajout d'eau dans la boîte d'un produit selon l'une des revendications 1 à 4, et le gâchage de la poudre avec l'eau.

11. Procédé selon la revendication 10, dans lequel l'eau est ajoutée jusqu'à l'indication de niveau de la boîte.

12. Procédé selon la revendication 10 ou 11, dans lequel le gâchage est effectué en agitant la boîte, de préférence sans l'utilisation d'un outil de gâchage.

13. Procédé de réalisation d'un ouvrage, comprenant la préparation d'un mortier selon le procédé de l'une des revendications 10 à 12, et l'application du mortier sur une surface dans lequel l'application du mortier sur une surface consiste en
- une application d'une couche d'enduit de finition sur une paroi ; ou
- une enduction d'une colle sur un élément de construction, le procédé comprenant en outre la mise en contact de l'élément de construction enduit de colle avec un autre élément de construction ; ou
- une opération de colmatage de cavités sur une paroi au moyen d'un enduit de rebouchage.

## Patentansprüche

1. Erzeugnis zur Zubereitung eines Mörtels, umfassend einen Behälter, enthaltend ein hydraulisches Bindemittelpulver, umfassend einen Anteil an Calciumsulfat von größer als oder gleich 70 %, wobei das in dem Pulver vorkommende Calciumsulfat in Form von Semihydrat zu mehr als 90 % vorhanden ist, wobei das hydraulische Bindemittelpulver einen Feuchtigkeitsgehalt von größer als oder gleich 0,3 % oder weniger als oder gleich 1,5 % aufweist; wobei der Behälter wasser- und luftdicht ist.

2. Erzeugnis nach Anspruch 1, wobei das hydraulische Bindemittelpulver Calciumsulfat und Calciumcarbonat umfasst.

3. Erzeugnis nach einem der Ansprüche 1 bis 2, wobei das hydraulische Bindemittelpulver Folgendes umfasst:
- 75 bis 80 % Calciumsulfat;
- 17 bis 22 % Calciumcarbonat;
- wahlweise, Celluloseether mit einem Anteil von weniger als 3 %;
- wahlweise, zusätzliche Additive mit einem Anteil von weniger als 2 %.

4. Erzeugnis nach einem der Ansprüche 1 bis 3, wobei der Behälter mindestens eine Füllstandsanzeige für die Zugabe von Wasser in dem Behälter umfasst, wobei die Füllstandsanzeige auf einer Innenfläche einer Behälterwand und/oder auf einer Außenfläche einer Behälterwand vorgesehen ist, wobei der Behälter vorzugsweise so angepasst ist, dass eine Sichtprüfung seines Inhalts durch die Wand möglich ist.

5. Verfahren zur Herstellung des Erzeugnisses nach einem der Ansprüche 1 bis 4, umfassend einen Verpackungsschritt des hydraulischen Bindemittelpulvers in den Behälter.

6. Verfahren nach Anspruch 5, umfassend einen Herstellungsschritt des hydraulischen Bindemittelpulvers vor dem Verpackungsschritt.

7. Verfahren nach Anspruch 5 oder 6, umfassend eine Reifungsphase des hydraulischen Bindemittelpulvers, nach dem Herstellungsschritt des Pulvers und/oder umfassend eine Reifungsphase eines Teils des hydraulischen Bindemittelpulvers während der Herstellung des Pulvers.

8. Verfahren nach Anspruch 7, wobei die Reifungsphase vor dem Verpackungsschritt in den Behälter ausgeführt wird, und wobei vorzugsweise das Pulver während der Reifungsphase gesackt ist.

9. Verfahren nach Anspruch 7 oder 8, wobei die Reifungsphase einer Zeitdauer von größer als oder gleich einer Woche, vorzugsweise größer als oder gleich einem Monat, oder größer als oder gleich zwei Monaten, oder größer als oder gleich drei Monaten, oder größer als oder gleich vier Monaten entspricht.

10. Verfahren zur Zubereitung eines Mörtels, umfassend die Zugabe von Wasser in dem Behälter zu einem Produkt nach einem der Ansprüche 1 bis 4 und das Mischen des Pulvers mit Wasser.

11. Verfahren nach Anspruch 10, wobei das Wasser bis zur Füllstandsanzeige des Behälters zugegeben wird.

12. Verfahren nach Anspruch 10 oder 11, wobei das Mischen durch Schütteln des Behälters, vorzugsweise ohne Verwendung eines Mischwerkzeugs, erfolgt.

13. Verfahren zur Realisierung einer Baumaßnahme, umfassend die Zubereitung eines Mörtels gemäß dem Verfahren nach einem der Ansprüche 10 bis 12 und das Aufbringen des Mörtels auf einer Fläche, wobei das Aufbringen des Mörtels auf eine Fläche Folgendes umfasst:
- Aufbringen einer Deckputzschicht auf eine Wand; oder
- Streichen eines Klebstoffs auf ein Bauteil, wobei das Verfahren zudem das in Kontakt bringen des mit Klebstoff bestrichenen Bauteils mit einem anderen Bauteil umfasst; oder
- einen Vorgang zur Versiegelung von Hohlräumen in einer Wand mittels eines Füllmaterials.

## Claims

1. A product for the preparation of a mortar, comprised of a container containing a hydraulic binding agent powder comprising a proportion of calcium sulfate greater than or equal to 70 %, the calcium sulfate present in the powder being in hemihydrate form at more than 90 %, said hydraulic binding agent powder having a humidity level greater than or equal to 0.3 % and less than or equal to 1.5 %; wherein the container is waterproof and airtight.

2. The product according to claim 1, wherein the hydraulic binding agent powder contains calcium sulfate and calcium carbonate.

3. The product according to one of claims 1 or 2, wherein the hydraulic binding agent powder contains:
- 75 to 80 % calcium sulfate;
- 17 to 22 % calcium carbonate;
- optionally, cellulose ethers in a proportion less than 3 %;
- optionally, supplementary additives in a proportion less than 2 %.

4. The product according to one of claims 1 to 3, wherein the container contains at least one level indicator for adding water into the container, the level indicator being present on an inner surface of a wall of the container and/or being present on an outer surface of a wall of the container, the container preferably being suitable for viewing the contents through the wall.

5. A process for manufacturing the product according to one of claims 1 to 4, comprising a step of packaging the hydraulic binding agent powder into the container.

6. The process according to claim 5, comprising a step of manufacturing the hydraulic binding agent powder prior to the step of packaging.

7. The process according to claim 5 or 6, comprising a hydraulic binding agent powder maturation phase, after the step of manufacturing the powder, and/or comprising a maturation phase for a fraction of the hydraulic binding agent powder as the powder is being manufactured.

8. The process according to claim 7, wherein the maturation phase is performed prior to the step of packaging into the container, and wherein the powder is preferably packaged in a bag during the maturation phase.

9. The process according to claim 7 or 8, wherein the maturation phase is greater than or equal to one week duration, preferably greater than or equal to one month, or greater than or equal to two months, or greater than or equal to three months, or greater than or equal to four months.

10. The process for preparation of a mortar, comprised of adding water in the container to a product according to one of claims 1 to 4, and mixing the powder with water.

11. The process according to claim 10, wherein water is added up to the level indicator on the container.

12. The process according to claim 10 or 11, wherein mixing is done by shaking the container, preferably without the use of a mixing tool.

13. The process of realization of construction work, comprised of preparing the mortar according to the process of one of claims 10 to 12, and applying the mortar onto a surface wherein the application of mortar onto a surface consists of:
- applying a thin finishing coat on one wall; or
- coating an adhesive on a construction element, said process additionally comprising contacting the coated construction element with an additional construction element; or
- an operation for sealing cracks in a wall using a filler.
